Europäisches Patentamt

European Patent Office

Office européen des brevets

(19)

(11) Numéro de publication: **0 097 065**
**B1**

(12) **FASCICULE DE BREVET EUROPÉEN**

(45) Date de publication du fascicule du brevet:
02.07.86

(51) Int. Cl.⁴: **F 16 H 7/12**

(21) Numéro de dépôt: **83400728.8**

(22) Date de dépôt: **12.04.83**

(54) Dispositif de mise en tension d'un lien de transmission sans fin.

(30) Priorité: **14.06.82 FR 8210328**

(43) Date de publication de la demande:
**28.12.83 Bulletin 83/52**

(45) Mention de la délivrance du brevet:
**02.07.86 Bulletin 86/27**

(84) Etats contractants désignés:
**DE GB IT**

(56) Documents cité:
**FR-A-1 581 626**
**FR-A-2 472 701**
**US-A-1 374 643**
**US-A-3 081 643**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Bortolussi, Gérard, 3 Rue de l'Hostellerie, F-95130 Franconville (FR)**

(74) Mandataire: **Moncheny, Michel, c/o Cabinet Lavoix 2 Place d'Estienne d'Orves, F-75441 Paris Cedex 09 (FR)**

LIBER, STOCKHOLM 1986

## Description

On a décrit dans le FR-A-2 472 701 un dispositif de mise en tension d'un lien de transmission sans fin, comprenant une platine portant un galet tendeur, un ressort de mise en tension disposé entre la platine et un boîtier destiné à être fixé sur unbâti, et des moyens de guidage et de fixation entre la platine et le bâti.

Dans ce dispositif, la platine comporte une butée d'appui pour ledit boîtier et les moyens de guidage et de fixation de la platine sur le bâti sont associés à une came permettant de déplacer la platine par rapport au boîtier, à l'encontre de l'action du ressort de mise en tension.

Le but de la présente addition est de réaliser un dispositif du même type qui soit de réalisation plus simple et, par conséquent, meilleur marché.

Ce dispositif est caractérisé en ce que le boîtier est constitué par une plaque coudée tandis que le galet est monté sur un embouti cylindrique de la platine, la butée d'appui étant délimitée par la face interne de cet embouti qui coopère avec un manchon tubulaire formé sur ladite plaque.

Selon une autre caractéristique, ce manchon tubulaire délimite un passage pour un organe de fixation du dispositif sur le bâti.

Un exemple de réalisation de l'invention fait l'objet de la description qui suit, en référence aux dessins joints dans lesquels:

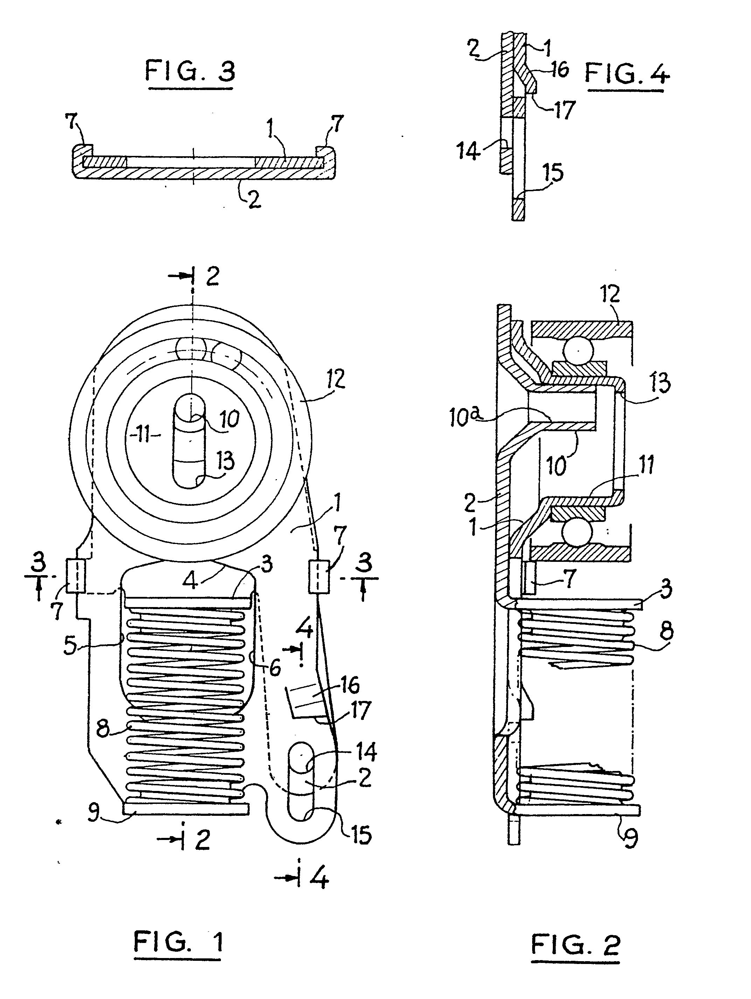

- la Fig. 1 est une vue d'ensemble du dispositif avant montage sur un bâti;
- les Fig. 2, 3 et 4 sont des coupes suivant les lignes 2-2, 3-3 et 4-4 de la Fig. 1;

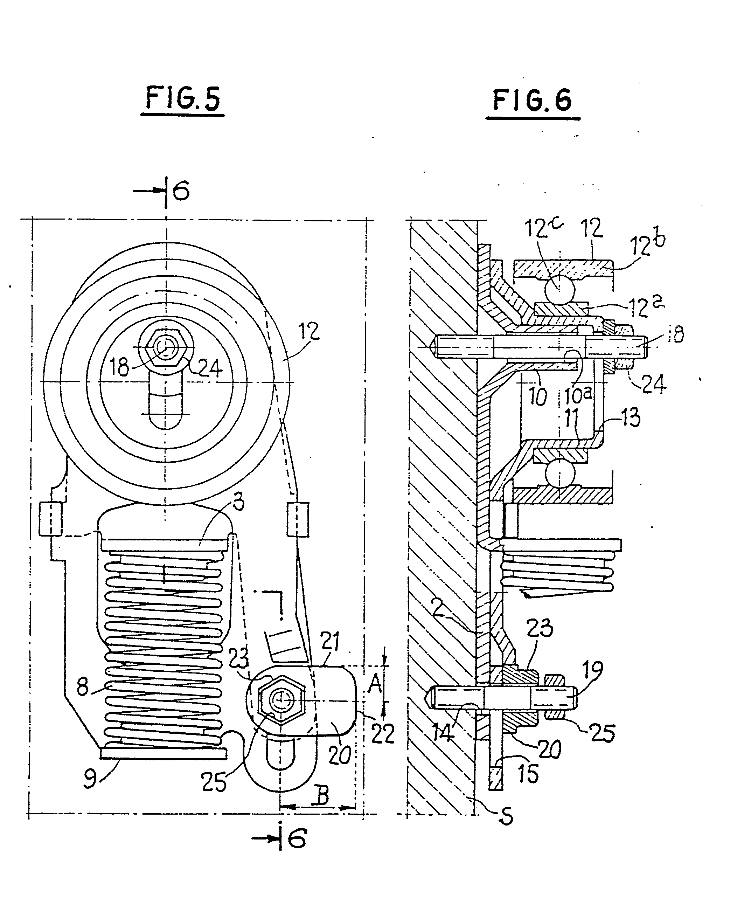

- la Fig. 5 est une vue analogue à celle de la Fig. 1, le dispositif étant monté sur un bâti;
- la Fig. 6 est une coupe suivant la ligne 6-6 de la Fig. 5.

Le dispositif représenté comprend principalement une platine 1 et une plaque 2. Une extrémité de la plaque 2 est coudée à angle droit pour former une patte 3 qui traverse, avec un léger jeu, une ouverture 4, à bords parallèles 5, 6, ménagée dans la platine 1. Deux languettes 7 formées sur la plaque 2 maintiennent la platine 1 avec un léger jeu autorisant son coulissement.

Un ressort hélicoïdal 8 est comprimé entre la patte 3 et une patte 9 pliée à angle droit sur une extrémité de la platine 1. L'effort de compression du ressort est encaissé par butée d'un manchon tubulaire 10, formé sur la plaque 2, contre la face interne d'un embouti cylindrique 11 formé sur la platine 1. Sur cet embouti cylindrique est emmanché un galet 12 constitué ici par deux bagues interne $12^{\underline{a}}$ et externe $12^{\underline{b}}$ séparées par des billes $12^{\underline{c}}$.

Le manchon tubulaire 10, qui délimite un passage $10^{\underline{a}}$ pour un organe de fixation, coïncide avec une lumière oblongue 13 pratiquée dans le fond de l'embouti cylindrique 11. Un autre passage 14 pour un organe de fixation de la plaque 2 coïncide également avec une lumière oblongue 15 de la platine 1.

Les axes longitudinaux des lumières 13, 15, l'axe du ressort 8, ainsi que les bords 5, 6 de l'ouverture 4 et les bords des languettes 7 sont parallèles entre eux.

Près de la lumière 15, une languette 16 obtenue par découpage s'écarte du plan de la platine 1 et présente une arête 17 perpendiculaire à la direction de la lumière 15.

Le dispositif ainsi décrit constitue un sous-ensemble équivalent à celui qui est décrit dans le brevet principal.

Il se monte aisément sur un bâti S par engagement du manchon 10 et du trou 14 sur des goujons 18, 19 de guidage et de fixation. Les goujons s'engagent en même temps dans les lumières 13, 15. Sur le goujon 19 s'engage un loquet 20 dont le pourtour forme une came destinée à coopérer avec l'arête 17 de la languette 16. Cette came comporte un bord 21 situé à une distance A de son axe et un bord 22 situé, par rapport à son axe, à une distance B supérieure à A. Sur le loquet 20 est soudé un six-pans 23 permettant sa manoeuvre à l'aide d'une clé standard.

L'ensemble peut être bloqué sur le bâti au moyen d'écrous 24, 25 vissés sur les goujons 18, 19.

L'utilisation du dispositif décrit est la même que pour le dispositif décrit dans le FR-A-2 472 701

## Revendications

1 - Dispositif de mise en tension d'un lien de transmission sans fin, comprenant une platine (1) portant un galet tendeur (12) et délimitant une butée d'appui pour un boîtier (2) destiné à être fixé sur un bâti, un ressort (8) de mise en tension disposé entre la platine et le boîtier, et des moyens de guidage et de fixation de la platine par rapport au bâti, associés à une came (20) permettant de déplacer la platine par rapport au boîtier, à l'encontre du ressort de mise en tension, caractérisé en ce que le boîtier est constitué par une plaque coudée (2), tandis que le galet (12) est monté sur un embouti cylindrique (11) de la platine, la butée d'appui étant délimitée par la face interne de cet embouti qui coopère avec un manchon tubulaire (10) formé sur ladite plaque.

2 - Dispositif suivant la revendication 1, caractérisé en ce que le ressort (8) est disposé entre une branche (3) de la plaque coudée et une patte (9) pliée à angle droit à une extrémité dela platine (1).

3 - Dispositif suivant la revendication 2, caractérisé en ce que ladite branche (3) traverse avec un léger jeu une ouverture (4) à bords parallèles (5, 6) ménagée dans la platine (1).

4 - Dispositif suivant la revendication 2, caractérisé en ce que le manchon tubulaire (10) est ménagé dans l'autre branche de la plaque coudée (2).

5 - Dispositif suivant l'une quelconque des revendications 1 à 4, caractérisé en ce que le manchon tubulaire (10) délimite un passage pour un organe de fixation du dispositif sur le bâti.

6 - Dispositif suivant la revendication 1, caractérisé en ce qu'une première lumière (13) de guidage est ménagée dans le fond de l'embouti (11), en face du manchon (10).

7 - Dispositif suivant la revendication 6, caractérisé en ce qu'une deuxième lumière de guidage (15) est ménagée dans la platine qui comporte au voisinage de cette lumière une patte découpée (16), en saillie, avec laquelle coopère la came (20).

**Patentansprüche**

1. Spannvorrichtung für ein Endlos-Kraftübertragungsverbindungsteil mit einer Tragplatte (1), welche eine Spannrolle (12) trägt und eine Stützanlage für ein auf einem Tragelement zu befestigendes Gehäuse (2) bestimmt, einer zwischen der Tragplatte und dem Gehäuse angeordneten Spannfeder (8) und Mitteln zur Führung und Befestigung der Tragplatte bezüglich des Tragelements, welche einem Nocken (20) zugeordnet sind, welcher eine Versetzung der Tragplatte bezüglich des Gehäuses entgegen der Spannfeder gestattet, dadurch gekennzeichnet, daß das Gehäuse durch eine abgewinkelte Platte (2) gebildet ist, während die Rolle (12) auf einem zylindrischen Napf (11) der Tragplatte angebracht ist, wobei die Stützanlage durch die Innenfläche dieses Napfs bestimmt ist, welcher mit einer auf der Platte ausgebildeten rohrförmigen Muffe (10) zusammenwirkt.

2. Vorrichtung nach Anspruch 1, dadurch gekennzeichnet daß die Feder (8) zwischen einem Schenkel (3) der abgewinkelten Platte und einem an einem Ende der Tragplatte (1) rechtwinklig abgebogenen Lappen (9) angeordnet ist.

3. Vorrichtung nach Anspruch 2, dadurch gekennzeichnet, daß der Schenkel (3) mit geringem Spiel eine Öffnung (4) mit parallelen Rändern (5, 6), welche in der Tragplatte (1) ausgebildet ist, durchsetzt.

4. Vorrichtung nach Anspruch 2, dadurch gekennzeichnet, daß die rohrförmige Muffe (10) im anderen Schenkel der abgewinkelten Platte (2) ausgebildet ist.

5. Vorrichtung nach irgendeinem der Ansprüche 1 bis 4, dadurch gekennzeichnet, daß die rohrförmige Muffe (10) einen Durchtritt für ein Befestigungselement zur Befestigung der Vorrichtung auf dem Tragelement bestimmt.

6. Vorrichtung nach Anspruch 1, dadurch gekennzeichnet, daß ein erstes Führungsschlitzloch (13) im Boden des Napfes (11) gegenüber der Muffe (10) ausgebildet ist.

7. Vorrichtung nach Anspruch 6, dadurch gekennzeichnet, daß ein zweites Führungsschlitzloch (15) in der Tragplatte ausgebildet ist, welche im Bereich dieses Schlitzloches einen vorspringenden ausgeschnittenen Lappen (16) aufweist, mit welchem der Nocken (20) zusammenwirkt.

**Claims**

1. A device for putting under tension an endless transmission connecting member, comprising a platen (1) carrying a tension roller (12) and defining a support abutment for a housing (2) adapted to be fixed on a frame, a tension-applying spring (8) disposed between the platen and the housing, and guiding and fixing means for the platen relative to the frame, associated with a cam (20) for displacing the platen relative to the housing, in opposition to the action of the tension-applying spring, characterised in that the housing is constituted by a bent plate (2) and the roller (12) is mounted on a cylindrical press formed portion (11) of the platen, the support abutment being defined by the inner face of this press-formed portion which cooperates with a tubular sleeve (10) formed on said plate.

2. A device according to claim 1, characterised in that the spring (8) is disposed between a branch (3) of the bent plate and a tab (9) bent at a right angle at one end of the platen (1).

3. A device according to claim 2, characterised in that said branch (3) extends through, with a slight clearance, an opening (4) having parallel edges (5, 6) formed in the platen (1).

4. A device according to claim 2, characterised in that the tubular sleeve (10) is formed in the other branch of the bent plate (2)

5. A device according to any one of the claims 1 to 4, characterised in that the tubular sleeve (10) defines a passage for an element for fixing the device to the frame.

6. A device according to claim 1, characterised in that a first guiding aperture (13) is provided in the bottom of the press-formed portion (11) in confronting relation to the sleeve (10).

7. A device according to claim 6, characterised in that a second guiding aperture (15) is provided in the platen which comprises in the vicinity of this aperture a projecting punched tab (16) with which the cam (20) cooperates.

0 097 065

FIG. 3

FIG. 4

FIG. 1

FIG. 2

1

FIG.5

FIG.6